# EUROPÄISCHE PATENTSCHRIFT

(11) **EP 0 882 483 B1**
(45) Veröffentlichungstag und Bekanntmachung des Hinweises auf die Patenterteilung: **13.10.2004**
(21) Anmeldenummer: 98110267.6
(22) Anmeldetag: 05.06.1998
(51) Int. Cl.: B01D 29/15, B01D 46/24

(54) **Filter für Gase und Flüssigkeiten**
Filter for gases and liquids
Filtre pour liquides et gaz

(30) Priorität: 05.06.1997 DE 19723580
(43) Veröffentlichungstag der Anmeldung: 09.12.1998
(73) Patentinhaber: MAHLE Filtersysteme GmbH, 70376 Stuttgart (DE)
(72) Erfinder: Gebert, Hans, 74080 Heilbronn (DE); Rutter, Engelbert, 9142 Globasnitz (DE)
(74) Vertreter: Patentanwalts-Partnerschaft, Rotermund + Pfusch + Bernhard

(56) Entgegenhaltungen:
- EP-A- 0 673 666
- DE-A- 19 508 815
- DE-B- 1 955 789
- US-A- 4 482 368
- US-A- 5 374 355

## Beschreibung

Die Erfindung betrifft ein Filter für Gase oder Flüssigkeiten nach den Oberbegriffen der unabhängigen Ansprüche 1 und 8.

Bei einem derartigen, aus EP 0 673 666 A1 bekannten Filter muss die axiale Spannkraft für einen dichten Einsatz des auswechselbaren Filterelementes innerhalb des Filtergehäuses über das filternde Material des Filterelementes übertragen werden. Hierdurch kann es bei einer zu hohen axialen Verspannung zu einer Beschädigung des Filtermaterials kommen.

Bei einem aus DE 29 48 781 A1 bekannten Filter ist die Endscheibe als Endkappe ausgebildet, die sich auf der zugeordneten Stirnwand in dem Deckel des Filtergehäuses abstützt. Dies hat zur Folge, dass das Filterelement mit Tragelement an der abströmöffnungsseitigen Stirnwand des Filtergehäuses nur in vollständig zusammengebautem Zustand des Filtergehäuses in axialer Richtung dichtend zur Anlage kommt. Dies bedingt, dass die axiale Länge des Filterelementes mit Tragelement sehr genau auf die Länge des Filtergehäuses abgestimmt sein muss. Die geringen, zulässigen Toleranzen dieser beiden axialen Längen verteuern die Herstellung dieses bekannten Filters.

Die Erfindung beschäftigt sich bei einem gattungsgemäßen Filter mit dem Problem, bei einem verschmutzungsbedingten Filterelemente-Wechsel einerseits möglichst wenig Material austauschen zu müssen und andererseits keine kostenaufwendigen, geringen Maßtoleranzen bei den gegeneinander zu dichtenden Bauteilen einhalten zu müssen und dennoch eine hohe Funktionsicherheit gewährleisten zu können.

Gelöst wird dieses Problem alternativ durch Ausführungen gattungsgemäßer Filter nach entweder den kennzeichnenden Merkmalen der jeweils unabhängigen Ansprüche 1 oder 8.

Die Verspannung der Endscheibe gegen die entgegengesetzte Stirnwand mit einem Kraftpfad ausschließlich über das Tragelement und nicht über das Filtermaterial zwischen den stirnseitigen Ringen des Filterelementes ermöglicht eine Überbrückung von Unterschieden der axialen Länge des Filterelementes mit dem Tragelement bei Aufrechterhaltung der Abdichtung durch die Ringe. Das Filterelement mit Tragelement kann dabei zylindrisch oder konisch sein.

Eine besonders zweckmäßige Ausgestaltung der Verspannung besteht darin, dass sich durch den Abströmraum ein an der abströmöffnungsseitigen Stirnwand befestigter Träger erstreckt, an dessen der Endscheibe zugewandtem Ende letztere mittels einer Verschraubung befestigt ist. Durch die Verschraubung kann eine Überbrückung erheblicher Unterschiede der axialen Länge des Filterelementes mit Tragelement ermöglicht werden.

Das Tragelement kann vorzugsweise als Lochblechzylinder mit abströmöffnungsseitigem Rand, der radial nach innen weist, ausgebildet sein, wobei der Rand die Formstabilität des Tragelementes verbessert und bei axialer Abdichtung des Filterelementes zwischen Endscheibe und abströmöffnungsseitiger Stirnwand des Filtergehäuses auch als Analge für den inneren Randbereich des abströmöffnungsseitigen Ringes dienen kann.

Eine Möglichkeit für die endscheibenseitige Abdichtung des Filterelementes gegenüber der Endscheibe besteht darin, dass der endscheibenseitige Ring einen von dem Filtermaterial abgewandten Ringfortsatz aufweist, der in einem ringförmigen Kragen der Endscheibe dichtend aufgenommen ist.

Eine andere Möglichkeit für die endscheibenseitige Abdichtung des Filterelementes gegenüber der Endscheibe besteht darin, dass der endscheibenseitige Ring einen von dem Filtermaterial abgewandten Ringfortsatz aufweist, der mittels eines ringförmigen Spannelementes gegen einen ringförmigen, zylindrischen Endrand der Endscheibe dichtend verspannt ist.

Eine weitere Möglichkeit für die endscheibenseitige Abdichtung des Filterelementes gegenüber der Endscheibe besteht darin, dass der Außendurchmesser der Endscheibe und der Außendurchmesser des endscheibenseitigen Ringes wenig kleiner als der Innendurchmesser des Filtergehäuses sind, und dass dieser Ring über den Außendurchmesser des Filtermaterials übersteht, wobei der Überstand dieses Ringes an einem ringförmigen Bund an der Innenseite des Filtergehäuses dichtend anliegt. Dabei ist die Funktion der endscheibenseitigen Stirnwand des Filtergehäuses von der Endscheibe selbst mit übernommen, so dass diese Stirnwand entfallen kann.

Bei den vorstehend beschriebenen Möglichkeiten erfolgt die Abdichtung des Filterelementes gegenüber der Endscheibe und gegenüber der abströmöffnungsseitigen Stirnwand des Filtergehäuses in axialer Richtung.

Bei der alternativen, erfindungsgemäßen Ausgestaltung gemäß dem unabhängigen Anspruch 8 erfolgt bei einer mit der Ausführung nach Anspruch 1 übereinstimmenden Kraftübertragung der axialen Spannkraft ausschließlich über das Tragelement die Dichtung des Filterelementes über eine dichte radiale Anlage der stirnseitigen Ringe des Filterelementes an dem Tragelement.

Vorteilhafte und zweckmäßige Ausgestaltungen der Ausführungen nach Anspruch 8 zeigen die Ansprüche 9 bis 11 auf.

Soweit bei den vorstehend beschriebenen Ausgestaltungen des Filters eine endscheibenseitige Stirnwand des Filtergehäuses erforderlich ist, kann deren Befestigung dadurch verwirklicht werden, dass die Verschraubung um eine Zusatzverschraubung verlängert ist, mittels derer die endscheibenseitige Stirnwand des Filtergehäuses befestigt ist. Dadurch können zusätzliche Befestigungsmittel eingespart werden.

Weitere vorteilhafte Ausführungen sind Gegenstand der Ansprüche 12 und 13.

Filter nach der Erfindung sind insbesondere als Luftfilter für Verbrennungsmotoren von Nutzkraftfahrzeugen verwendbar, da bei einem derartigen Einsatz das Filterelement besonders häufig ausgetauscht werden muss.

In der Zeichnung sind fünf Ausführungsbeispiele für Filter nach der Erfindung jeweils in einem Mittelschnitt dargestellt, und zwar zeigt
- Fig. 1: eine Ausführung mit Ringfortsatz und ringförmigem Kragen,
- Fig. 2: ebenfalls eine Ausführung mit Ringfortsatz und ringförmigem Kragen,
- Fig. 3: eine Ausführung mit Ringfortsatz und ringförmigem Spannelement,
- Fig. 4: eine Ausführung ohne endscheibenseitige Stirnwand,
- Fig. 5: eine Ausführung mit radial dichtend an dem Tragelement anliegenden Ringen.

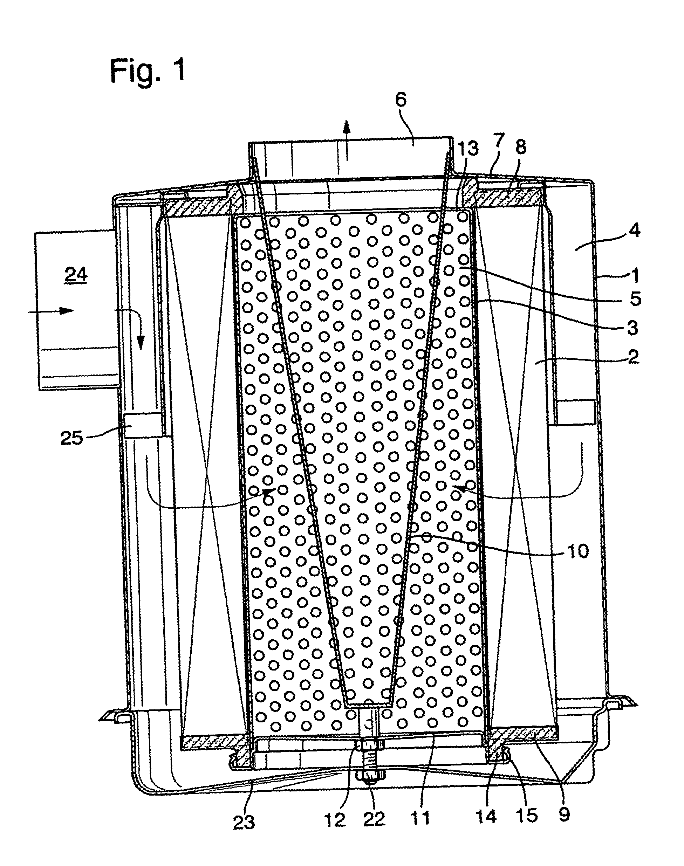

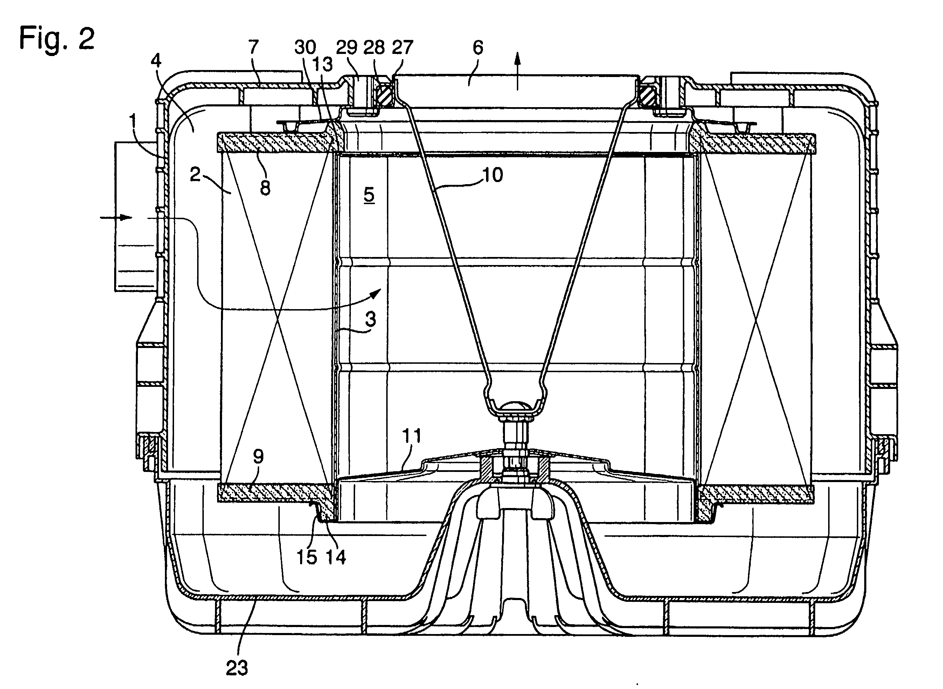

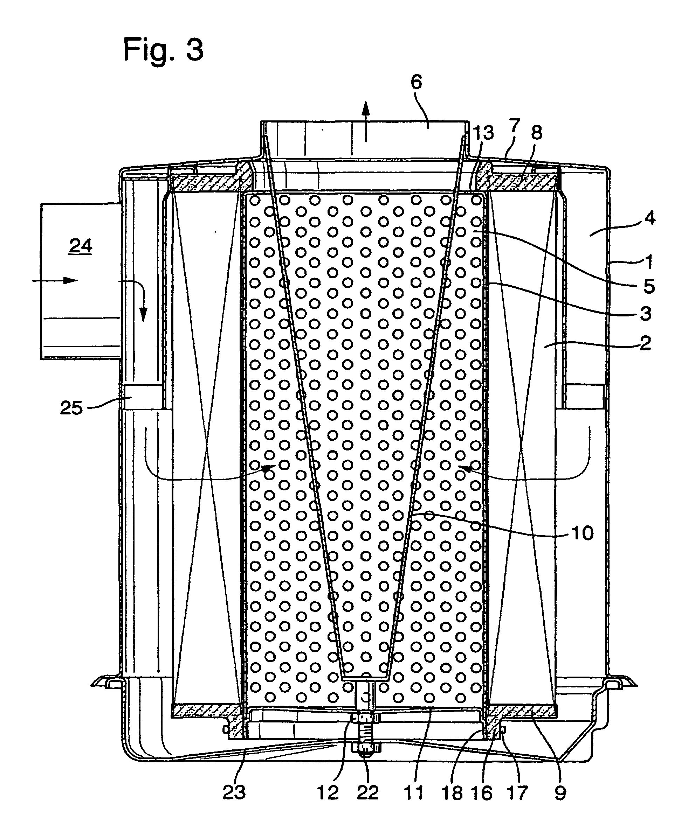

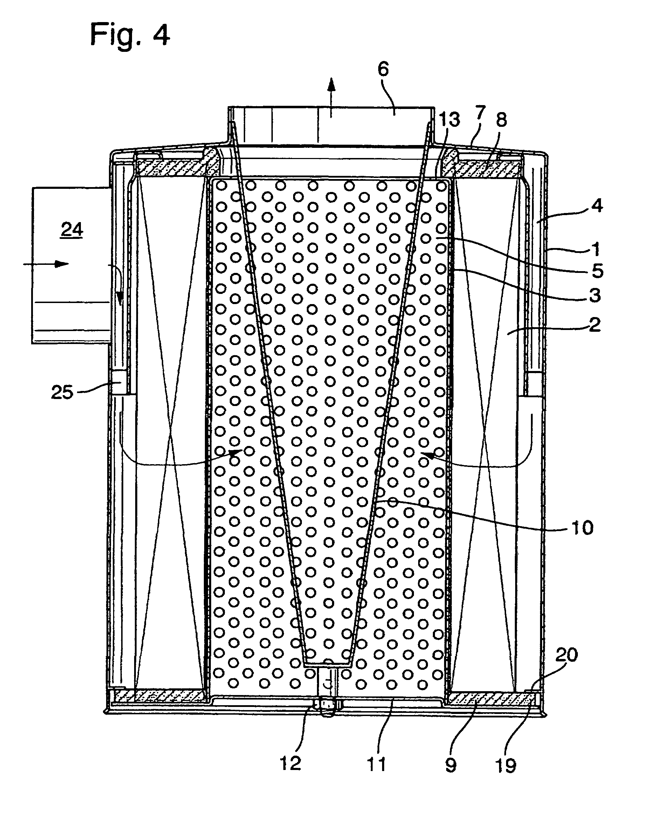

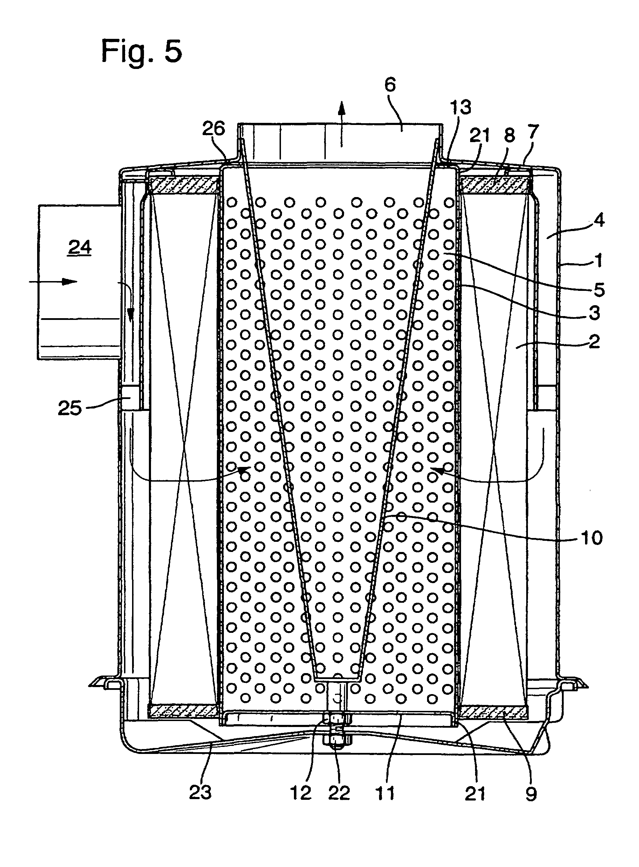

In einem zylindrischen Filtergehäuse 1 ist ein Filterelement 2 mit daran innen anliegendem Tragelement 3 angeordnet, das einen äußeren Zuströmraum 4 von einem inneren Abströmraum 5 trennt, an den sich eine Abströmöffnung 6 in einer Stirnwand 7 des Filtergehäuses 1 anschließt. Das Filterelement 2 besteht aus Filtermaterial, dessen beide axiale Enden in je einem aus Vergußmasse bestehenden Ring 8,9 aufgenommen sind. Durch den Abströmraum 5 erstreckt sich ein an der abströmöffnungsseitigen Stimwand 7 des Filtergehäuses 1 befestigter Träger 10, an dessen von der abströmöffnungsseitigen Stirnwand 7 abgewandtem Ende durch eine Verschraubung 12 eine Endscheibe 11 befestigt ist, die den Abströmraum 5 an dem der Abströmöffnung 6 entgegengesetzten Ende abschließt. Das Tragelement 3 ist als Lochblechzylinder ausgebildet und weist an seinem der Abströmöffnung 6 zugewandten Ende einen Rand 13 auf, der radial nach innen weist. In der Umfangswand des Filtergehäuses 1 ist eine einen tangentialen Eintritt erzwingende Zuströmöffnung 24 vorgesehen, der in dem Filtergehäuse 1 ein Leitschaufelkranz 25 nachgeschaltet ist.
Bei den Ausführungsbeispielen nach Fig. 1 und 2 weist der der Endscheibe 11 zugewandte Ring 9 einen von dem Filtermaterial abgewandten Ringfortsatz 14 auf, der in einem ringförmigen Kragen 15 der Endscheibe 11 dichtend aufgenommen ist.
Bei dem Ausführungsbeispiel nach Fig. 2 sind das Filtergehäuse 1 samt Stirnwänden 7 und 23 als aus Kunststoff bestehende Formteile dargestellt. In der Stirnwand 7 ist eine aus Metall bestehende, ringförmige Umrandung 27 der Abströmöffnung 6 angeordnet, an der der Träger 10 befestigt ist. Diese Umrandung 27 liegt unter Zwischenschaltung eines Dichtringes 28 an der entsprechenden Öffnung in der Stirnwand 7 an und ist an der Stirnwand 7 durch Halteorgane 29 befestigt. Letztere dienen auch der Befestigung eines fedemden, ringförmigen Tellers 30, der federnd auf dem Ring 8 aufliegt und auch der Abdichtung zwischen Zuströmraum 4 und Abströmraum 5 dient.
Bei dem Ausführungsbeispiel nach Fig. 3 weist der der Endscheibe 11 zugewandte Ring 9 einen von dem Filtermaterial abgewandten Ringfortsatz 16 auf, der mittels eines ringförmigen Spannelementes 17 gegen einen ringförmigen, zylindrischen Endrand 18 der Endscheibe 11 verspannt ist.
Bei dem Ausführungsbeispiel nach Fig. 4 weisen die Endscheibe 11 und der ihr zugewandte Ring 9 Außendurchmesser auf, die nur wenig kleiner sind als der Innendurchmesser des Filtergehäuses 1. Dieser Ring 9 steht über den Außendurchmesser des Filtermaterials über, wobei der Überstand 19 dieses Ringes 9 an einem ringförmigen Bund 20 an der Innenseite des Filtergehäuses 1 dichtend anliegt.
Bei dem Ausführungsbeispiel nach Fig. 5 weist das Tragelement 3 an seinen beiden axialen Enden ringförmige, geschlossene Endabschnitte 21 auf, an denen außen die Ringe 8,9 radial dichtend anliegen. Zwischen dem radial nach innen weisenden Rand 13 an dem der Abströmöffnung 6 zugewandten Ende des Tragkörpers 3 und der abströmöffnungsseitigen Stirnwand 7 des Filtergehäuses 1 ist eine Ringdichtung 26 angeordnet.
Bei den Ausführungsbeispielen nach Fig. 1, 2, 3 und 5 ist die Verschraubung 12 an dem Ende des Trägers 10 um eine Zusatzverschraubung 22 verlängert, mittels derer die endscheibenseitige Stirnwand 23 des Filtergehäuses 1 befestigt ist.

## Patentansprüche

1. Filter für Gase oder Flüssigkeiten, bei dem in einem etwa zylindrischen Filtergehäuse (1) ein von außen nach innen durchströmbares, auswechselbares, ringförmiges Filterelement (2) einen äußeren Zuströmraum (4) von einem inneren Abströmraum (5) trennt, wobei das Filterelement innenseitig von einem von letzterem trennbaren, Durchtrittsöffnungen aufweisenden, der Form des Filterelementes angepaßten Tragelement (3) abgestützt ist, wobei das Tragelement an einer Stirnwand des Filtergehäuses, die eine an den inneren Abströmraum (5) anschließende Abströmöffnung (6) aufweist, abgestützt ist, wobei an dem von der Abströmöffnung abgewandten Ende des Tragelementes eine den Abströmraum abschließende Endscheibe (11) vorgesehen ist, wobei ferner beide axiale Enden des Filtermaterials des Filterelementes in je einem aus elastischem Material bestehenden Ring (8; 9) aufgenommen sind und wobei des weiteren einer dieser Ringe (8) als Abdichtung gegenüber der abströmseitigen Stirnwand (7) und der andere dieser Ringe als Abdichtung gegenüber Tragelement (3) und Endscheibe (11) dient,
**gekennzeichnet durch** die Merkmale,
- die Endscheibe (11) ist mit dem dieser zugewandten Ende des Tragelementes (3) verbunden und über dieses Tragelement (3) gegen die entgegengesetzte Stirnwand (7) des Filtergehäuses (1) verspannt,
- ein radial innen über das Filtermaterial herausragender Teil des einen Ringes (8) ist axial zwischen Tragelement (3) und Stirnwand (7) verspannt.

2. Filter nach Anspruch 1,
**dadurch gekennzeichnet,**
**dass** sich durch den Abströmraum (5) ein an der abströmöffnungsseitigen Stirnwand (7) befestigter Träger (10) erstreckt, an dessen der Endscheibe (11) zugewandtem Ende letztere mittels einer Verschraubung (12) befestigt ist.

3. Filter nach Anspruch 1 oder 2,
**dadurch gekennzeichnet,**
**dass** das Tragelement (3) als perforierter Zylinder mit abströmöffnungsseitigem Rand (13), der radial nach innen weist, ausgebildet ist.

4. Filter nach Anspruch 1, 2 oder 3,
**dadurch gekennzeichnet,**
**dass** der endscheibenseitige Ring (9) einen von dem Filtermaterial abgewandten Ringfortsatz (14) aufweist, der in einem ringförmigen Kragen (15) der Endscheibe (11) dichtend aufgenormen ist.

5. Filter nach Anspruch 1, 2 oder 3,
**dadurch gekennzeichnet,**
**dass** der endscheibenseitige Ring (9) einen von dem Filtermaterial abgewandten Ringfortsatz (16) aufweist, der mittels eines ringförmigen Spannelementes (17) gegen einen ringförmigen, zylindrischen Endrand (18) der Endscheibe (11) dichtend verspannt ist.

6. Filter nach Anspruch 1, 2 oder 3,
**dadurch gekennzeichnet,**
**dass** der Außendurchmesser der Endscheibe (11) und der Außendurchmesser des endscheibenseitigen Ringes (9) wenig kleiner als der Innendurchmesser des Filtergehäuses (1) sind, und dass dieser Ring (9) über den Außendurchmesser des Filtermaterials übersteht, wobei der Überstand (19) dieses Ringes (9) an einem ringförmigen Bund (20) an der Innenseite des Filtergehäuses (1) dichtend anliegt.

7. Filter nach den Ansprüchen 2 und 4 oder 5,
**dadurch gekennzeichnet,**
**dass** die Verschraubung (12) um eine Zusatzverschraubung (22) verlängert ist, mittels derer die endscheibenseitige Stirnwand (23) des Filtergehäuses (1) befestigt ist.

8. Filter für Gase oder Flüssigkeiten, bei dem in einem etwa zylindrischen Filtergehäuse ein von außen nach innen durchströmbares, auswechselbares, ringförmiges Filterelement einen äußeren Zuströmraum von einem inneren Anströmraum trennt, wobei das Filterelement innenseitig auf einem von letzterem trennbaren, Durchtrittsöffnungen aufweisenden, der Form des Filterelementes angepaßten Tragelement abgestützt ist, wobei an dem von der Abströmöffnung abgewandten Ende des Tragelementes eine den Abströmraum abschließende Endscheibe vorgesehen ist und wobei ferner beide axiale Enden des Filtermaterials des Filterelementes in je einem aus elastischem Material bestehenden Ring aufgenommen sind, und wobei des weiteren das Tragelement an seinen beiden Enden ringförmige, geschlossene Endabschnitte aufweist, an denen außen die Ringe radial dichtend anliegen,
**gekennzeichnet durch** die Merkmale,
- das Tragelement (3) ist an einer Stirnwand des Filtergehäuses (1), die eine an den inneren Abströmraum anschließende Abströmöffnung aufweist, dichtend abgestützt,
- die Endscheibe (11) ist mit dem dieser zugewandten Ende des Tragelementes (3) verbunden und gegen die entgegengesetzte Stirnwand (7) des Filtergehäuses verspannt.

9. Filter nach Anspruch 8,
**dadurch gekennzeichnet,**
**dass** sich durch den Abströmraum (5) ein an der abströmöffnungsseitigen Stirnwand (7) befestigter Träger (10) erstreckt, an dessen der Endscheibe (11) zugewandtem Ende letztere mittels einer Verschraubung (12) befestigt ist.

10. Filter nach Anspruch 9,
**dadurch gekennzeichnet,**
**dass** die Verschraubung (12) um eine Zusatzverschraubung (22) verlängert ist, mittels derer die endscheibenseitige Stirnwand (23) des Filtergehäuses (1) befestigt ist.

11. Filter nach Anspruch 8, 9 oder 10,
**dadurch gekennzeichnet,**
**dass** das Tragelement (3) als perforierter Zylinder mit abströmöffnungsseitigem Rand (13), der radial nach innen weist, ausgebildet ist.

12. Filter nach einem der Ansprüche 2 bis 7 oder 9 bis 11,
**dadurch gekennzeichnet,**
**dass** zumindest derjenige Teil des Filtergehäuses, in dem die Abströmöffnung (6) liegt, aus Kunststoff und der Träger (10) aus Metall besteht, wobei der Träger (10) radial gedichtet im Randbereich der Abströmöffnung (6) befestigt ist.

13. Filter nach Anspruch 12,
**dadurch gekennzeichnet,**
**dass** der Träger (10) mit einem axialen Anschlag (30) für den der Abströmöffnung (7) zugewandten Ring (8) des Filterelementes (2) verbunden ist.

## Claims

1. A filter for gases or liquids, in which a replaceable ring-shaped filter element (2) through which a medium can flow from the outside to the inside in an approximately cylindrical housing (1) separates an outer inflow space (4) from an inner outflow space (5), whereby the filter element is supported on the inside by a supporting element (3) which has openings that can be separated on the inside from the filter element and is adapted to the shape of the filter element, whereby the supporting element is itself supported on an end wall of the filter housing which has an outflow opening (6) connected to the inner outflow space (5), whereby an end disk (11) that seals the outflow space is provided on the end of the supporting element facing away from the outflow opening, whereby also both axial ends of the filter material of the filter element are accommodated in a ring (8; 9) made of an elastic material, and whereby one of these rings (8) additionally serves as a seal with respect to the end wall (7) on the outflow end and the other ring serves as a seal with respect to the supporting element (3) and the end disk (11),
**characterized by** the features
- the end disk (11) is connected to the end of the supporting element (3) which faces the end disk and is clamped by this supporting element (3) against the opposite end wall (7) of the filter housing (1),
- a part of the ring (8) protruding on the inside radially beyond the filter material is clamped axially between the supporting element (3) and the end wall (7).

2. The filter according to Claim 1,
**characterized in that**
a carrier (10) which is mounted on the end wall (7) on the outflow end extends through the outflow space (5), the end disk being mounted on the end of the carrier that faces the end disk (11) by means of a screw connection (12).

3. The filter according to Claim 1 or 2,
**characterized in that**
the supporting element (3) is designed as a perforated cylinder with an edge (13) on the outflow end which points radially inward.

4. The filter according to Claims 1, 2 or 3,
**characterized in that**
the ring (9) on the end disk side has a ring projection (14) which faces away from the filter material and is accommodated in a ring-shaped collar (15) of the end disk (11) to form a seal.

5. The filter according to Claims 1, 2 or 3,
**characterized in that**
the ring (9) on the end disk side has a ring projection (16) which faces away from the filter element and which is clamped with a seal by means of a ring-shaped clamping element (17) against a ring-shaped cylindrical end edge (18) of the end disk (11).

6. The filter according to Claims 1, 2 or 3,
**characterized in that** the outside diameter of the end disk (11) and the outside diameter of the ring (9) on the end disk side are slightly smaller than the inside diameter of the filter housing (1) and this ring (9) protrudes beyond the outside diameter of the filter material, whereby the projecting part (19) of this ring (9) is in contact with a ring-shaped collar (20) on the inside of the filter housing (1) with a seal.

7. The filter according to Claims 2, 4 or 5,
**characterized in that**
the screw connection (12) is lengthened by an additional screw connection (22) by means of which the end wall (23) on the end disk side of the filter housing (1) is attached.

8. The filter for gases or liquids, whereby a replaceable ring-shaped filter element through which a medium can flow from the outside to the inside in an approximately cylindrical filter housing separates an outer inflow space from an inner outflow space, whereby the filter element is supported on the inside on a supporting element which has openings and can be separated from the filter element and is adapted to the shape of the filter element, whereby an end disk which seals the outflow space is provided on the end of the supporting element which faces away from the outflow opening, and whereby also both axial ends of the filter material of the filter element are accommodated in a ring made of an elastic material, and whereby addition the supporting element has ring-shaped end sections that are closed on both ends (of the supporting element) with the rings also in radial sealing contact with the end sections,
**characterized by** the features, whereby
- the supporting element (3) is supported on an end wall of the filter housing (1) which has an outflow opening connected to the inside outflow space with a seal,
- the end disk (11) is connected to the end of the supporting element (3) facing the end disk and is clamped against the opposite end wall (7) of the filter housing.

9. The filter according to Claim 8,
**characterized in that**
a carrier (10) mounted on the end wall (7) on the outflow opening side extends through the outflow space (5), the end disk being attached by means of a screw connection (12) to the end of the carrier facing the end disk (11).

10. The filter according to Claim 9,
**characterized in that**
the screw connection (12) is lengthened by an additional screw connection (22) by means of which the end wall (23) of the filter housing (1) on the end disk side is attached.

11. The filter according to Claims 8, 9 or 10,
**characterized in that**
the supporting element (3) is designed as a perforated cylinder with an edge (13) on the outflow opening end which faces radially inward.

12. The filter according to any one of Claims 2 through 7 or 9 through 11,
**characterized in that**
at least the part of the filter housing in which the outflow opening (6) is situated is made of plastic and the carrier (10) is made of metal, with the carrier (10) being mounted in the edge area of the outflow opening (6) so that it is sealed radially.

13. The filter according to Claim 12,
**characterized in that**
the carrier (10) is connected to an axial stop (30) for the ring (8) of the filter element (2) facing the outflow opening (7).

## Revendications

1. Filtre pour gaz ou liquides, dans lequel, dans un logement de filtre (1) approximativement cylindrique, un élément de filtrage (2) en forme d'anneau, remplaçable, à travers lequel le fluide s'écoule de l'extérieur vers l'intérieur sépare un espace d'amenée (4) extérieur d'un espace d'évacuation (5) intérieur, dans lequel l'élément de filtrage est étayé sur son côté intérieur par un élément de support (3) amovible de ce dernier, présentant des ouvertures traversantes et adapté à la forme de l'élément de filtrage, dans lequel l'élément de support est étayé sur une paroi frontale du logement de filtre, laquelle présente une ouverture d'évacuation (6) contiguë à l'espace d'évacuation (5) intérieur, dans lequel, à l'extrémité de l'élément de support qui se détourne de l'ouverture d'évacuation, une rondelle d'extrémité (11) qui obture l'espace d'évacuation est prévue, dans lequel en outre les deux extrémités axiales du matériau de filtrage de l'élément de filtrage s'engagent chacune dans un anneau (8 ;9) constitué de matériau élastique et dans lequel enfin un de ces anneaux (8) sert de joint d'étanchéité relativement à la paroi frontale (7) du côté de l'évacuation du flux et l'autre de ces anneaux (9) sert de joint d'étanchéité relativement à l'élément de support (3) et à la rondelle d'extrémité (11),
**caractérisé par** les caractéristiques,
- la rondelle d'extrémité (11) est reliée à l'extrémité de l'élément de support (3) tournée vers cette dernière et pressée par l'intermédiaire dudit élément de support (3) contre la paroi frontale (7) opposée du logement de filtre (1),
- une partie d'un des anneaux (8) faisant saillie sur le matériau de filtrage dans une direction radiale interne est pressée axialement entre l'élément de support (3) et la paroi frontale (7).

2. Filtre selon la revendication 1, **caractérisé en ce qu'**à travers l'espace d'évacuation (5), un support (10) fixé à la paroi frontale (7) du côté de l'ouverture d'évacuation s'étend, sur lequel l'extrémité tournée vers la rondelle d'extrémité (11) est fixée à cette dernière au moyen d'une connexion à vis (12).

3. Filtre selon la revendication 1 ou 2, **caractérisé en ce que** l'élément de support (3) est configuré comme un cylindre perforé avec un bord (13) du côté de l'ouverture d'évacuation, qui se dirige radialement vers l'intérieur.

4. Filtre selon la revendication 1,2 ou 3, **caractérisé en ce que** l'anneau (9) du côté de la rondelle d'extrémité présente un prolongement (14) qui se détourne du matériau de filtrage, lequel s'engage hermétiquement dans un collier (15) en forme d'anneau de la rondelle d'extrémité (11).

5. Filtre selon la revendication 1,2 ou 3, **caractérisé en ce que** l'anneau (9) du côté de la rondelle d'extrémité présente un prolongement (16) qui se détourne du matériau de filtrage, lequel est pressé hermétiquement au moyen d'un élément de serrage (17) en forme d'anneau contre un bord d'extrémité (18) cylindrique, en forme d'anneau de la rondelle d'extrémité (11).

6. Filtre selon la revendication 1,2 ou 3, **caractérisé en ce que** le diamètre externe de la rondelle d'extrémité (11) et le diamètre externe de l'anneau (9) du côté de la rondelle d'extrémité sont moins petits que le diamètre interne du logement de filtre (1) et **en ce que** cet anneau (9) saille au dessus du diamètre externe du matériau de filtrage, moyennant quoi la protubérance (19) de cet anneau (9) repose hermétiquement sur un collier (20) en forme d'anneau du côté intérieur du logement de filtre (1).

7. Filtre selon les revendications 2 et 4 ou 5, **caractérisé en ce que** la connexion à vis (12) est prolongée par une connexion à vis supplémentaire (22), au moyen de laquelle la paroi frontale (23) du côté de la rondelle d'extrémité du logement de filtre (1) est fixée.

8. Filtre pour gaz ou liquides, dans lequel, dans un logement de filtre approximativement cylindrique, un élément de filtrage en forme d'anneau, remplaçable, à travers lequel le fluide s'écoule de l'extérieur vers l'intérieur sépare un espace d'amenée extérieur d'un espace d'évacuation intérieur, dans lequel l'élément de filtrage est étayé sur son côté intérieur par un élément de support amovible de ce dernier, présentant des ouvertures traversantes et adapté à la forme de l'élément de filtrage, dans lequel, à l'extrémité de l'élément de support qui se détourne de l'ouverture d'évacuation, une rondelle d'extrémité qui obture l'espace d'évacuation est prévue, dans lequel en outre les deux extrémités axiales du matériau de filtrage de l'élément de filtrage s'engagent chacune dans un anneau constitué de matériau élastique et dans lequel enfin l'élément de support présente à ses deux extrémités des portions d'extrémité en forme d'anneau, fermées, sur l'extérieur desquelles les anneaux reposent radialement et hermétiquement,
**caractérisé par** les caractéristiques,
- l'élément de support (3) est étayé hermétiquement par une paroi frontale du logement de filtre (1), laquelle présente une ouverture d'évacuation contiguë à l'espace d'évacuation interne,
- la rondelle d'extrémité (11) est reliée à l'extrémité de l'élément de support (3) tournée vers cette dernière et pressée contre la paroi frontale (7) opposée du logement d filtre (1).

9. Filtre selon la revendication 8, **caractérisé en ce que**, à travers l'espace d'évacuation (5), un support (10) fixé à la paroi frontale (7) du côté de l'ouverture d'évacuation s'étend, sur lequel l'extrémité tournée vers la rondelle d'extrémité (11) est fixée à cette dernière au moyen d'une connexion à vis (12).

10. Filtre selon la revendication 9, **caractérisé en ce que** la connexion à vis (12) est prolongée par une connexion à vis supplémentaire (22), au moyen de laquelle la paroi frontale (23) du côté de la rondelle d'extrémité du logement de filtre (1) est fixée.

11. Filtre selon la revendication 8,9 ou 10, **caractérisé en ce que** l'élément de support (3) est configuré comme un cylindre perforé avec un bord (13) du côté de l'ouverture d'évacuation, qui se dirige radialement vers l'intérieur.

12. Filtre selon une des revendications 2 à 7 ou 9 à 11, **caractérisé en ce qu'**au moins ladite partie du logement de filtre, sur laquelle repose l'ouverture d'évacuation (6), est constituée de plastique et le support (10) est constitué de métal, moyennant quoi le support (10) est fixé radialement et hermétiquement à la zone du bord de l'ouverture d'évacuation (6).

13. Filtre selon la revendication 12, **caractérisé en ce que** le support (10) est relié à une butée (30) axiale de l'anneau (8) tourné vers l'ouverture d'écoulement (7)de l'élément de filtrage (2).
